# EUROPEAN PATENT SPECIFICATION

(11) **EP 2 743 482 B1**
(45) Date of publication and mention of the grant of the patent: **27.01.2021**
(21) Application number: 12196514.9
(22) Date of filing: 11.12.2012
(51) Int. Cl.: F02D 35/02, G01L 23/22, F02P 5/152

(54) **Knock control system, combustion engine and method of operating the same**
Klopfsteuerungssystem, Verbrennungsmotor und Betriebsverfahren dafür
Système de commande de cliquetis, moteur à combustion et son procédé de fonctionnement

(43) Date of publication of application: 18.06.2014
(73) Proprietor: Caterpillar Motoren GmbH & Co. KG, 24159 Kiel (DE)
(72) Inventor: Sixel, Eike Joachim, 24109 Kiel (DE)
(74) Representative: BRP Renaud & Partner mbB Rechtsanwälte Patentanwälte Steuerberater

(56) References cited:
- EP-A1- 0 018 858
- WO-A1-93/20424
- DE-A1-102010 064 186
- FR-A1- 2 813 639
- JP-A- S60 230 565
- US-A- 5 215 059
- US-A1- 2009 120 410

## Description

### Technical Field

The present disclosure generally relates to an internal combustion engine and a method of operating the same, in particular to a knock control system for an internal combustion engine.

### Background

Knocking can occur during operation of, for example, gas engines or dual fuel engines operating in gas mode when one or more pockets of air/gas mixture explode outside of the envelope of the normal combustion front in a combustion chamber of the engine. The resulting shock wave creates a characteristic metallic sound (also called "knock" or "pinging"). When knocking occurs during extended periods of time, the engine may be damaged or even destroyed.

In an effort to prevent knocking from occurring, different control systems have been used. For example, US 2011/0259298 A1 discloses a knocking control system for a gas engine in which a knocking occurrence ratio is controlled to a target occurrence ratio in order to avoid excessive knocking.

WO 93/20424 A1 discloses a method for detecting knocking in an internal-combustion engine. The signals from a knock sensor are digitized, highpass-filtered and integrated, and the signal thus obtained is compared with two predetermined limit values. Knocking combustion is considered to have been detected when both limit values are exceeded.

US 2009/120410 A1 discloses an ignition timing controlling apparatus and ignition timing controlling method for an internal combustion engine.

FR 2 813 639 A1 discloses a diagnostic process for use in evaluation of sensor signals, especially knock sensor signals.

US 5,215,059 A discloses a system for reducing engine knock in an internal combustion engine.

DE 10 2010 064 186 A1 discloses a method and a device for the treatment of uncontrolled combustions in an internal combustion engine.

The present disclosure is directed, at least in part, to improving or overcoming one or more aspects of prior systems.

### Summary of the Disclosure

According to one aspect of the present disclosure, a knock control system for an internal combustion engine comprises the features of claim 1.

According to another aspect of the present disclosure, an internal combustion engine comprises the features of claim 8.

In yet another aspect of the present disclosure, a method of operating an internal combustion engine comprises the features of claim 10.

In a further aspect of the present disclosure, a computer program comprises computer-executable instructions which, when executed by a computer, cause the computer to perform the steps of the method of the above aspect.

Other features and aspects of the present disclosure will be apparent from the following description and the accompanying drawings.

### Brief Description of the Drawings

Fig. 1 is a schematic view of an exemplary internal combustion engine according to the present disclosure;
Fig. 2 is a schematic view of a knock control system according to an exemplary embodiment of the present disclosure;
Fig. 3 is a schematic diagram illustrating knock thresholds used in an exemplary embodiment of the present disclosure; and
Fig. 4 is a flow diagram illustrating a method of operating an internal combustion engine according to an exemplary embodiment of the present disclosure.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as a limiting description of the scope of protection. Rather, the scope of protection shall be defined by the appended claims.

The present disclosure may be based in part on the realization that an operating range of an internal combustion engine may be divided into three operating regions. In a first region, substantially no knocking may occur. In a second region, knocking will definitely occur during combustion in the combustion chambers of the engine. A third region may be a transitional region between the first and the second region. In order to assure that no harmful knocking occurs, a knock threshold may be defined in the transitional region between the normal combustion region and the knocking combustion region. Returning the engine to operate in the first region when this threshold is exceeded may, however, result in an early reduction of engine performance away from an actual knock limit of the engine.

Therefore, according to the present disclosure, an upper and a lower knock threshold are defined in the transitional region between the normal combustion region and the knocking combustion region. The upper knock threshold is disposed closer to the actual knock limit of the engine than the lower knock threshold. When the engine reaches the lower knock threshold, the knock control system according to the present disclosure may allow operating the engine in the region between the lower knock threshold and the upper knock threshold when knocking occurs in less than a predetermined number of combustion cycles. When the predetermined number of combustion cycles is exceeded, or when the upper knock threshold is exceeded, the knock control system initiates countermeasures to return the engine to safe operation, for example, below the lower knock threshold. In this manner, operation of the engine closer to the actual knock limit may be possible. Accordingly, engine performance may be increased while it may be assured that the engine is not damaged due to excessive knocking.

The present disclosure may further be based in part on the realization that returning the engine to safe operation when the predetermined number of combustion cycles during which knocking occurs is exceeded may simplify control algorithms compared to more complex solutions. According to the present disclosure, the engine is normally operated below the lower knock threshold, and is only allowed to operate above the lower knock threshold while the amount of knocking does not exceed a predetermined amount.

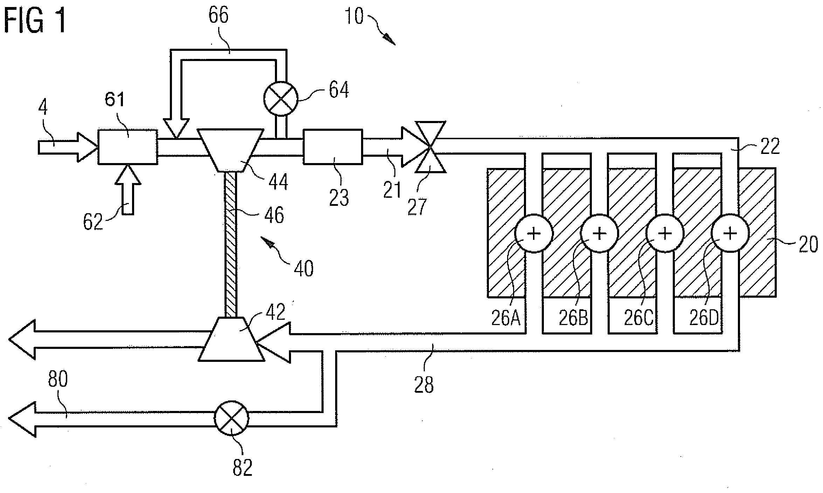

Referring now to the drawings, an exemplary embodiment of an internal combustion engine 10 is illustrated in Fig. 1. Internal combustion engine 10 may include features not shown, such as fuel systems, air systems, cooling systems, peripheries, drive train components, etc. For the purposes of the present disclosure, internal combustion engine 10 is a gaseous fuel internal combustion engine. One skilled in the art will recognize, however, that internal combustion engine 10 may be any type of internal combustion engine, for example, a dual fuel engine or any other Otto or diesel internal combustion engine that utilizes a mixture of fuel and air for combustion.

Internal combustion engine 10 may be of any size, with any number of cylinders and in any configuration ("V", "in-line", etc.). Internal combustion engine 10 may be used to power any machine or other device, including ships or other marine applications, locomotive applications, on-highway trucks or vehicles, off-highway machines, earth-moving equipment, generators, aerospace applications, pumps, stationary equipment such as power plants, or other engine-powered applications.

Still referring to Fig. 1, internal combustion engine 10 comprises an engine block 20 including a bank of cylinders 26A-26D, at least one fuel tank (not shown), a turbocharger 40 associated with cylinders 26A-26D, and an intake manifold 22.

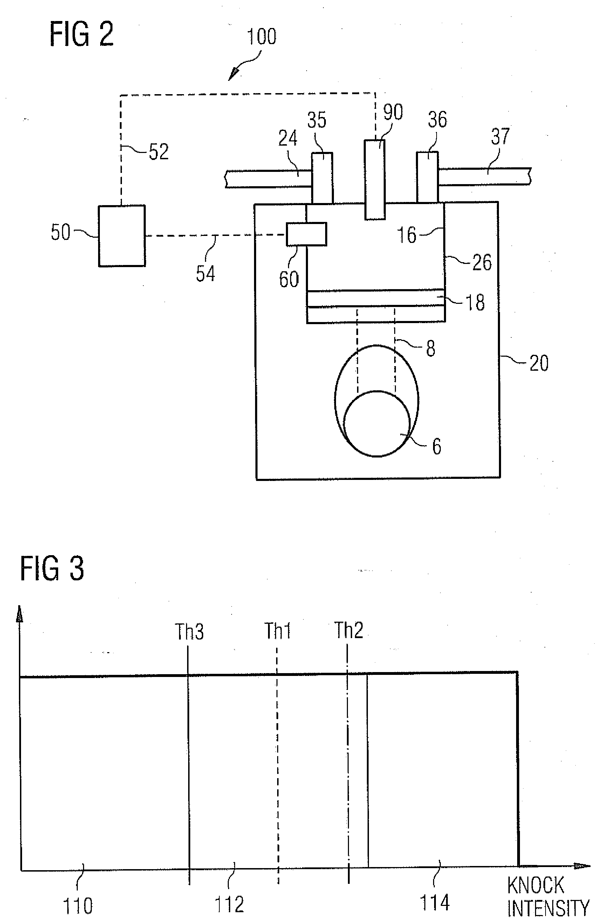

Engine block 20 includes a crank-case (not shown) within which a crank-shaft 6 (see Fig. 2) is supported. Crank-shaft 6 is connected to pistons 18 (see Figs. 2) that are movable within each of cylinders 26A-26D during operation of internal combustion engine 10.

Intake manifold 22 is fluidly connected to each of cylinders 26A-26D. Each of cylinders 26A-26D is provided with at least one inlet valve 35 (see Fig. 2) that is adapted to open or close a fluid connection between an intake port 24 and a corresponding combustion chamber 16 of cylinders 26A-26D.

An exhaust manifold 28 is connected to each of cylinders 26A-26D. Each of cylinders 26A-26D is provided with at least one exhaust valve 36 disposed in an exhaust passage 37 (see Fig. 2) and being configured to open and close a fluid connection between combustion chamber 16 of each cylinder 26A-26D and exhaust manifold 28.

Generally, when internal combustion engine 10 is operated, a mixture of gaseous fuel and air (in the following referred to as the "mixture") is introduced into the combustion chambers of the plurality of cylinders 26A-26D via intake manifold 22 or an injection system. After combustion, exhaust gases generated by the combustion process are released from cylinders 26A-26D through exhaust manifold 28.

Turbocharger 40 is configured to use the heat and pressure of the exhaust gas of internal combustion engine 10 to drive a compressor 44 for compressing the mixture prior to being supplied to the engine. Specifically, exhaust gas passing a turbine 42 of turbocharger 40 rotates turbine 42, thereby decreasing in pressure and temperature. Compressor 44 is rotatably connected to turbine 42 via a common shaft 46 and driven by turbine 42.

In order to generate the mixture, a gas mixer 61 is configured to suck in air through a main air inlet 4 and gaseous fuel through a fuel inlet 62. Within gas mixer 61, the air mixes with the gaseous fuel, and the resulting mixture is supplied to compressor 44. It should be appreciated that, in other embodiments, the gaseous fuel and the air may be mixed in a different manner. For example, instead of mixer 61, gas valves may be provided for each cylinder 26A-26D to inject the gaseous fuel into the air supplied to each cylinder, for example, upstream of inlet valve 35. It is also contemplated that gaseous fuel may be directly injected into each cylinder using a suitable gaseous fuel injector.

Generally, an outlet of compressor 44 is fluidly connected to an inlet of intake manifold 22 via a compressor connection 21. As shown in Fig. 1, an outlet of compressor 44 is connected to the inlet of intake manifold 22 via a cooler 23. A throttle valve 27 arranged downstream of cooler 23 is configured to open or close the fluid connection between compressor connection 21 and intake manifold 22, thereby enabling or restricting a flow of the mixture from compressor connection 21 into intake manifold 22.

During operation of internal combustion engine 10, the mixture of gaseous fuel and air is compressed and cooled before being supplied to cylinders 26A-26D. Within cylinders 26A-26D, further compression and heating of the mixture may be caused by movement of pistons 18 (see Fig. 2). Then, the mixture within the cylinders 26A-26D may be ignited, either by using a spark plug or due to the compression of the mixture within the combustion chamber. A pilot injection of fuel may be used to initiate the combustion. The produced exhaust gas is discharged via exhaust manifold 28.

An outlet of exhaust manifold 28 is fluidly connected to an inlet of turbine 42. An outlet of turbine 42 may be fluidly connected to, for example, an exhaust gas treatment system (not shown).

In some embodiments, as indicated in Fig. 1, internal combustion engine 10 may be provided with a waste gate system including a waste gate connection 80 and a waste gate valve 82. Additionally, internal combustion engine 10 may include a blow-off system including a blow-off connection 66 and a blow-off valve 64. It should be appreciated that blow-off connection 66 and blow-off valve 64 may be provided with different configurations than the one shown in Fig. 1, if appropriate.

Turning now to Fig. 2, an exemplary embodiment of a knock control system according to the present disclosure is illustrated. The person skilled in the art will recognize that the exemplary cylinder 26 shown in Fig. 2 may demonstrate the principles of the cylinders 26A-26D of Fig. 1. Therefore, the exemplary disclosed construction shown in Fig. 2 may also apply to the cylinders 26A-26D shown in Fig. 1.

Fig. 2 shows a schematic cross-sectional view of cylinder 26. A knock control system 100 is associated with cylinder 26. Cylinder 26 defines a combustion chamber 16 and includes a piston 18. Crank-shaft 6 is connected to piston 18 via piston rod 8. Piston 18 is configured to reciprocate within cylinder 26.

Cylinder 26 is connected to intake manifold 22 (Fig. 1) via intake passage 24 and to exhaust manifold 28 via exhaust passage 37. Inlet valve 35 is disposed in intake passage 24, and exhaust valve 36 is disposed in exhaust passage 37.

Inlet valve 35 is configured to selectively supply intake air or a mixture of intake air and a fuel to combustion chamber 16. Exhaust valve 36 is configured to selectively discharge exhaust from combustion chamber 16 to exhaust manifold 28 after combustion.

An ignition device 90 is configured to ignite the mixture of fuel and air supplied to combustion chamber 16 at a desired ignition timing. In some embodiments, ignition device 90 may be a spark plug. In other exemplary embodiments, ignition device may be configured to inject a pilot injection of, for example, liquid fuel to ignite the mixture.

Knock control system 100 includes a knock detection sensor 60 associated with cylinder 26. Knock detection sensor 60 my be disposed at least in part within combustion chamber 16, or may be disposed adjacent to combustion chamber 16. Knock detection sensor 60 may be any known knock detection sensor and may be configured to detect, for example, pressure fluctuations within combustion chamber 16, sound waves propagating in engine block 20, temperature fluctuations within combustion chamber 16, or the like.

Knock control system 100 further includes a controller 50. Controller 50 is connected to knock detection sensor 60 via a communication line 54 and to ignition device 90 via a communication line 52. Controller 50 is configured to control an ignition timing of the mixture in combustion chamber 16 via ignition device 90. Further, controller 50 is configured to receive the results of the detection by detection sensor 60 and determine the amount of knocking for cylinder 26 based on the received detection results.

Controller 50 may be a single microprocessor or dual microprocessors that include means for controlling, among others, an operation of various components of combustion engine 10. Controller 50 may be a general engine controller (ECU) capable of controlling numerous functions associated with internal combustion engine 10 and/or its associated components. Controller 50 may include all components required to run an application such as, for example, a memory, a secondary storage device, and a processor such as a central processing unit or any other means known in the art for controlling internal combustion engine 10 and its components. Various other known circuits may be associated with controller 50, including power supply circuitry, signal conditioning circuitry, communication circuitry and other appropriate circuitry. Controller 50 may analyze and compare received and stored data and, based on instructions and data stored in memory or input by a user, determine whether action is required. For example, controller 50 may compare received values with the target values stored in memory, and, based on the results of the comparison, transmit signals to one or more components to alter the operation status of the same.

Controller 50 may include any memory device known in the art for storing data relating to operation of internal combustion engine 10 and its components. The data may be stored in the form of one or more maps that describe and/or relate, for example, the detection results from knock detection sensor 60 to the amount of knocking (the knock intensity) associated with cylinder 26. Each of the maps may be in the form of tables, graphs and/or equations, and may include a compilation of data collected from lab and/or field operation of internal combustion engine 10. The maps may be generated by performing instrumented tests on the operation of internal combustion engine 10 under various operating conditions while varying parameters associated therewith or performing various measurements. Controller 50 may reference these maps and control operation of one component in response to the desired operation of another component. For example, the maps may contain data on the required shifting of the ignition timing for reducing the amount of knocking detected by knock detection sensor 60.

In particular, controller 50 may include maps relating the amount of knocking detected by knock detection sensor 60 to different operating regions of combustion engine 10. As shown in Fig. 3, in some exemplary embodiments, three operating regions 110, 112, 114 may be defined in controller 50.

Operating region 110 corresponds to a safe operating region. In other words, when controller 50 determines that the detection result received from knock detection sensor 60 corresponds to a knock intensity in operating region 110, it is determined that no knocking combustion occurs in combustion chamber 16.

Similarly, when the results from knock detection sensor 60 indicate a knock intensity in operating region 114, it is almost certain that knocking combustion, which may damage internal combustion engine 10, occurs in combustion chamber 16.

In transition operating region 112, which is located between safe operating region 110 and knocking combustion region 114, there is the possibility that some knocking occurs in cylinder 26.

Controller 50 further defines a first knock threshold Th1 and a second knock threshold Th2. First knock threshold Th1 is disposed roughly between safe operating region 110 and knocking combustion region 114. Second knock threshold Th2 is disposed closer to knocking combustion region 114 than first knock threshold Th1. A third knock threshold Th3 below first knock threshold Th1 may also be defined in controller 50. In the example shown in Fig. 3, third knock threshold Th3 may correspond to the boundary between safe operating region 110 and transition operating region 112. First, second and third knock thresholds Th1, Th2 and Th3 may be determined in advance for internal combustion engine on the basis of lab or field testing of internal combustion engine 10 and/or simulations or the like.

During operation, controller 50 is configured to receive the detection result from knock detection sensor 60 and determine the knock intensity which corresponds to the detection result. When the knock intensity lies in safe operating region 110 or is below first knock threshold Th1, controller 50 may determine that combustion engine 10 operates in a safe region and substantially no knocking is occurring in cylinder 26.

When the knock intensity exceeds second threshold Th2, controller 50 may determine that combustion engine 10 is operating in a region in which knocking combustion that may damage the engine is occurring.

When the detection result corresponds to a knock intensity that lies between first knock threshold Th1 and second knock threshold Th2, controller 50 determines that it may be allowable to operate combustion engine 10 in the transition operating region 112 while the detection result lies between the two thresholds for less than a predetermined number of combustion cycles, as will be described in more detail below.

In some embodiments, controller 50 may be configured to count the number of times n the knock intensity lies between first knock threshold Th1 and second knock threshold Th2 during a predetermined number of combustion cycles and calculate a ratio ("knock occurrence ratio") r of the number of times n to the predetermined number of combustion cycles. In some embodiments, controller 50 may consider a certain number of combustion cycles, for example, the 100 most recent combustion cycles, or any other number of most recent combustion cycles when determining the knock occurrence ratio r. Controller 50 may be configured to compare the calculated knock occurrence ratio r with a predetermined knock occurrence ratio threshold rₜₕ. When the calculated knock occurrence ratio r exceeds the knock occurrence ratio threshold rₜₕ, controller 50 determines that measures have to be taken to reduce the amount of knocking for cylinder 26. For example, controller 50 may determine that combustion engine 10 should be returned to safe operating region 110.

In some embodiments, knock occurrence ratio threshold rₜₕ may be set to, for example, 30% to 60% of combustion cycles. It should be appreciated, however, that other values may be used, depending on the specific application or other factors such as the environment in which combustion engine 10 is operating and the like.

Upon determining that measures need to be taken to reduce the amount of knocking, controller 50 may initiate one or more measures to reduce knocking. Any known measure may be used, for example, an ignition timing for cylinder 26 may be retarded, the amount of fuel supplied to combustion chamber 16 during each combustion cycle may be reduced, the ratio of fuel and air in the mixture may be changed, or the temperature of the charge air supplied to combustion engine 10 may be reduced. It should be appreciated that any operating parameter of combustion engine 10 which may result in a reduction of the amount of knocking may be used.

In some embodiments, it may be sufficient to reduce the amount of knocking below first knock threshold Th1. In other words, it may not be necessary to reduce the knock intensity such that combustion engine 10 is operating in safe operation region 110. In other embodiments, controller 50 may be configured to reduce the amount of knocking below third knock threshold Th3, which may be located in safe operating region 110 or in transition operating region 112.

After causing combustion engine 10 to operate below first knock threshold Th1, controller 50 may be configured to continue monitoring the detection results from knock detection sensor 60. Further, in order to increase engine performance, controller 50 may be configured to gradually increase or decrease the operating parameter of the engine which has previously been decreased or increased in order to reduce knocking. In some embodiments, controller 50 may be configured to gradually advance the ignition timing for cylinder 26 while monitoring the output from knock detention sensor 60. For example, controller 50 may advance the ignition timing for cylinder 26 until the knock intensity reaches first knock threshold Th1. In other embodiments, the ignition timing or a similar parameter may be changed until a specific knock intensity above or below first knock threshold Th1 is reached. Alternatively, in other exemplary embodiments, controller 50 may be configured to return the operating parameter to its original value after a predetermined time has passed since the measure to reduce knocking was performed by controller 50.

In some exemplary embodiments, each of the plurality of cylinders 26A-26D may be associated with a knock detection sensor 60. In these exemplary embodiments, controller 50 may be configured to individually control knocking for each of the plurality of cylinders 26A-26D. Accordingly, the corresponding control measures described above may only be performed for the cylinders in which excessive knocking occurs.

In other exemplary embodiments, only a single knock detection sensor 60 may be associated with the plurality of cylinders 26A-26D. In these embodiments, the single knock detection sensor 60 may be associated with one of cylinders 26A-26D, or may be disposed at a position between or adjacent to cylinders 26A-26D. Controller 50 may be configured to simultaneously control all of cylinders 26A-26D in the same manner when excessive knocking is detected by the single knock detection sensor 60.

In other embodiments, each of the plurality of cylinders 26A-26D may be associated with a knock detection sensor 60. In these embodiments, controller 50 may be configured to simultaneously perform the knock control for all of cylinders 26A-26D when excessive knocking is detected by one of the knock detection sensors 60 associated with the plurality of cylinders 26A-26D.

### Industrial Applicability

The industrial applicability of the systems and methods for controlling knocking in an internal combustion engine described herein will be readily appreciated from the foregoing discussion. An exemplary machine suited to the disclosure is a large internal combustion engine such as a gas or a dual fuel engine. Examples for such engines are the engines of the series M46DF, GCM46, GCM34, M32DF, M3x manufactured by Caterpillar Motoren GmbH & Co. KG, Kiel, Germany. Similarly, the systems and methods described herein can be adapted to a large variety of other internal combustion engines used for various different tasks.

In accordance with some embodiments, knock control system 100 is adapted to detect knocking during operation of internal combustion engine 10 in a first operating mode, and control operation of internal combustion engine based on the amount of knocking detected. Knock control system 100 is adapted to determine a number of times n knocking above first knock threshold Th1 occurs during a predetermined number of combustion cycles in the first operating mode, and cause internal combustion engine 10 to operate in a second operating mode with a reduced amount of knocking when the number of times n is greater than a predetermined maximum allowable number of times nₘₐₓ or knocking above a second threshold Th2, which is higher than first knock threshold Th1, occurs.

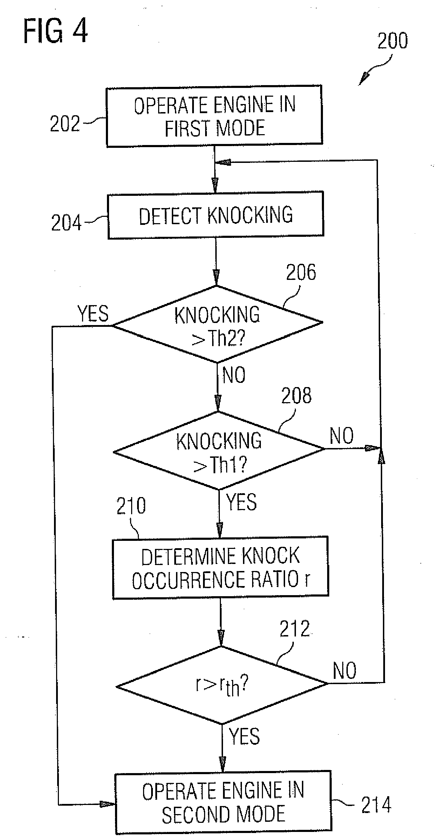

Fig. 4 illustrates an exemplary embodiment of the process 200 implemented by knock control system 100.

Controller 50 may operate combustion engine 10 in a first operating mode (Step 202). The first operating mode may be characterized by a specific ignition timing for each of the cylinders of the combustion engine 10, a specific fuel amount supplied to each of cylinders 26A-26D, and/or a specific temperature of the charge air or the mixture of the charge air and fuel supplied to combustion engine 10.

During normal operation of combustion engine 10 in the first operating mode, combustion engine 10 may operate in operating region 110 shown in Fig. 3, where substantially no knocking combustion occurs. However, when the operating conditions of combustion engine 10 change, for example, when the temperature of the charge air supplied to combustion engine 10 increases, or an engine load increases, combustion engine 10 may begin to operate in transition operating region 112, and knocking may start to occur.

Controller 50 is configured to detect the knock intensity during each combustion cycle of combustion engine 10 (Step 204). In each combustion cycle, controller 50 is adapted to determine the knock intensity from the output of detection sensor 60, and compare the knock intensity to second knock threshold Th2 (Step 206). When the knock intensity is greater than second knock threshold Th2 (Step 206: YES), controller 50 is configured to change one or more of the operating parameters of combustion engine 10 to cause combustion engine 10 to operate in a second operating mode with a reduced amount of knocking (Step 214). For example, controller 50 may be configured to retard an ignition timing of the cylinder in which knocking occurs, or reduce the amount of fuel supplied to the cylinder in which knocking occurs. In other embodiments, controller 50 may be configured to retard the ignition timing of all cylinders and/or reduce the amount of fuel supplied to all the cylinders when knocking is detected for one of the plurality of cylinders 26A-26D. In other embodiments, controller 50 may be configured to reduce the temperature of the charge air or the mixture of charge air and fuel supplied to internal combustion engine 10. For example, controller 50 may be operatively connected to cooler 23 (Fig. 1) and operate cooler 23 to effect cooling of the mixture supplied to combustion engine 10.

In case the intensity of the knocking detected by knock detection sensor 60 is less than second knock threshold Th2 (Step 206: NO), controller 50 is configured to compare the knock intensity to first knock threshold Th1 (Step 208). In case the knock intensity is smaller than first knock threshold Th1 (Step 208: NO), controller 50 is configured to return to step 204 to continue detecting the knocking in each combustion cycle.

If controller 50 determines that the intensity of the knocking detected by knock detection sensor 60 is greater than first knock threshold Th1 (Step 208: YES), controller 50 determines the knock occurrence ratio r of knocking above first knock threshold Th1 (Step 210). In some embodiments, controller 50 may be configured to advance a counter every time knocking above first knock threshold Th1 is detected. Then, knock occurrence ratio r may be calculated by dividing the counter value by the total number of combustion cycles for which the knock intensity was detected. In some embodiments, controller 50 may be configured to consider a predetermined number of combustion cycles, and divide the number of combustion cycles during which knocking above first knock threshold Th1 occurs by the predetermined number of combustion cycles. For example, the previous 100 detection results may be used to determine the knock occurrence ratio r. Accordingly, for example, controller 50 may be configured to count the number of times knocking above first knock threshold Th1 occurred during the previous 100 combustion cycles, and divide this number by 100 to obtain knock occurrence ratio r.

In Step 212, controller 50 compares the determined knock occurrence ratio r to a knock occurrence ratio threshold rₜₕ (Step 212). In some exemplary embodiments, knock occurrence ratio threshold rₜₕ may be set to a value between 30% and 60%. It should be appreciated, however, that in other embodiments different values may be used for knock occurrence ratio threshold rₜₕ. Knock occurrence ratio rₜₕ may be determined by experiments or from field operation of internal combustion engine 10.

When the determined knock occurrence ratio r is smaller than knock occurrence ratio threshold rₜₕ (Step 212: NO), controller 50 returns to step 204 to continue detecting knocking for each combustion cycle of combustion engine 10. If, on the other hand, the determined knock occurrence ratio r is greater than knock occurrence ratio threshold rₜₕ (Step 212: YES), controller 50 is configured to cause combustion engine 10 to operate in the second operating mode as described above (Step 214).

It should be noted that, in some embodiments, controller 50 may be configured to change one or more operating parameters of combustion engine 10 such that substantially no knocking above first knock threshold Th1 occurs. In other embodiments, controller 50 may be configured to change the control parameters of combustion engine 10 in such a manner that substantially no knocking above third knock threshold Th3, which is below first knock threshold Th1, occurs. For example, third knock threshold Th3 may be the boundary between safe operating region 110 and transition operating region 112, as shown in Fig. 3. In other embodiments, third knock threshold Th3 may be disposed at other positions below first knock threshold Th1, either in safe operating region 110 or in transition operating region 112.

After combustion engine 10 has been caused to operate in the second operating mode, controller 50 may be configured to continue detecting knocking during each combustion cycle of combustion engine 10. Controller 50 may be configured to determine whether a predetermined condition for returning combustion engine 10 to the first operating mode is met. For example, controller 50 may be configured to continuously monitor knock occurrence ratio r and compare the same to knock occurrence ratio threshold rₜₕ, and may determine that combustion engine 10 is safe to operate in the first operating mode when the determined knock occurrence ratio r is smaller than knock occurrence ratio threshold rₜₕ over a predetermined number of combustions cycles or for a predetermined period of time. In other exemplary embodiments, controller 50 may be configured to compare the knock intensity determined during each combustion cycle to a further threshold, for example, third knock threshold Th3, and determine that it is safe to operate combustion engine 10 in the first operating mode when the knock intensity is below this further threshold for a predetermined amount of time. In yet other exemplary embodiments, controller 50 may be configured to return combustion engine 10 to the first operating mode after a predetermined time has lapsed since combustion engine 10 was caused to operate in the second operating mode.

It will be appreciated that the foregoing description provides examples of the disclosed systems and methods. However, it is contemplated that other implementations of the disclosure may differ in detail from the foregoing examples. All references to the disclosure or examples thereof are intended to reference the particular example being discussed at that point and are not intended to imply any limitation as to the general disclosure.

Recitation of ranges of values herein are merely intended to serve as a shorthand method for referring individually to each separate value falling within the range, unless otherwise indicated herein, and each separate value is incorporated into the specification as if it were individually recited herein. All method steps described herein can be performed in any suitable order, unless otherwise indicated or clearly contradicted by the context.

## Claims

1. A knock control system (100) for an internal combustion engine (10), the knock control system (100) comprising:
a knock detection unit (50, 60) including at least one knock detection sensor (60) associated with at least one cylinder (26, 26A, 26B, 26C, 26D) of the internal combustion engine (10), for detecting knocking above a first knock threshold (Th1) and above a second knock threshold (Th2), which is higher than the first knock threshold (Th1), during operation of the internal combustion engine (10); and
a knock control unit (50, 90) for controlling operation of the internal combustion engine (10) based on the knocking detected by the knock detection unit (50, 60), the knock control unit being configured to:
determine a number of times (n) knocking above the first knock threshold (Th1) is detected during a predetermined number of combustion cycles in a first operating mode of the internal combustion engine (10); and
when the number of times (n) is greater than a predetermined maximum allowable number of times (nmax) or when knocking above the second knock threshold (Th2) is detected, cause the internal combustion engine (10) to operate in a second operating mode in which no knocking above a third knock threshold (Th3), which is lower than the first knock threshold (Th1), occurs, by changing control parameters of the internal combustion engine,
wherein the knock control unit (50, 90), after causing the internal combustion engine (10) to operate in the second operating mode, is further configured to cause the internal combustion engine (10) to again operate in the first operating mode after a predetermined time has lapsed since the internal combustion engine (10) was caused to operate in the second operating mode, or when no knocking above the third knock threshold (Th3) is detected for a predetermined amount of time.

2. The knock control system (100) of claim 1, wherein
the knock control unit (50, 90) includes a controller (50) operatively connected to the at least one knock detection sensor (60), the controller (50) being configured to:
determine an amount of knocking from a detection result from the at least one knock detection sensor (60); and
control at least one of an ignition timing of the internal combustion engine (10), a fuel amount supplied to the internal combustion engine (10) for combustion, and a temperature of charge air or a mixture of charge air and fuel supplied to the internal combustion engine (10) for combustion.

3. The knock control system of claim 2, wherein the controller (50) is configured to cause the internal combustion engine (10) to operate in the second operating mode by reducing an amount of fuel supplied to the at least one cylinder (26, 26A, 26B, 26C, 26D) of the internal combustion engine (10) for combustion.

4. The knock control system of claim 2 or 3, wherein the controller (50) is configured to cause the internal combustion engine (10) to operate in the second operating mode by retarding an ignition timing for the at least one cylinder (26, 26A, 26B, 26C, 26D) of the internal combustion engine (10).

5. The knock control system of any one of claims 2 to 4,
wherein the controller (50) is configured to cause the internal combustion engine (10) to operate in the second operating mode by cooling charge air or a mixture of charge air and fuel supplied to at least one cylinder (26, 26A, 26B, 26C, 26D) of the internal combustion engine (10).

6. The knock control system of any one of claims 1 to 5,
wherein the knock control unit (50, 90) is configured to cause the internal combustion engine (10) to operate in the second operating mode by gradually adjusting an operating parameter of the internal combustion engine (10) from a first value associated with the first operating mode until substantially no knocking above the first knock threshold (Th1) is detected.

7. The knock control system of any one of claims 1 to 6,
wherein the knock control unit (50, 90) is configured to cause the internal combustion engine (10) to operate in the second operating mode by changing at least one operating parameter of the internal combustion engine (10) to a preset value associated with the second operating mode.

8. An internal combustion engine (10) comprising:
a plurality of cylinders (26, 26A, 26B, 26C, 26D); and
the knock control system (100) of any one of claims 1 to 7.

9. The internal combustion engine (10) of claim 8, further comprising a plurality of knock detection sensors (60), each knock detection sensor (60) being associated with one of the plurality of cylinders (26, 26A, 26B, 26C, 26D), wherein the knock control unit (50, 90) is configured to individually adjust an ignition timing or a fuel injection amount for each of the plurality of cylinders (26, 26A, 26B, 26C, 26D) based on the knocking detected by the corresponding knock detection sensor (60).

10. A method of operating an internal combustion engine (10), comprising:
determining (210) a number of times (n) knocking above a first knock threshold (Th1) occurs during a predetermined number of combustion cycles in a first operating mode of the internal combustion engine (10);
when the number of times (n) is greater than a predetermined maximum allowable number of times (nₘₐₓ) or when knocking above a second knock threshold (Th2), which is higher than the first knock threshold (Th1), is detected, causing (214) the internal combustion engine (10) to operate in a second operating mode in which no knocking above a third knock threshold (Th3), which is lower than the first knock threshold (Th1), occurs, by changing control parameters of the internal combustion engine; and
after causing the internal combustion engine (10) to operate in the second operating mode, causing the internal combustion engine (10) to again operate in the first operating mode after a predetermined time has lapsed since the internal combustion engine was caused to operate in the second operating mode, or when no knocking above the third knock threshold (Th3) is detected for a predetermined amount of time.

11. A computer program comprising computer-executable instructions which, when executed, cause the knock detection unit and the knock control unit of a knock control system for an internal combustion engine (10) according to any one of the claims 1-9 to perform the steps of the method of claim 10.

## Patentansprüche

1. Klopfsteuerungssystem (100) für einen Verbrennungsmotor (10), wobei das Klopfsteuerungssystem (100) Folgendes umfasst:
eine Klopferfassungseinheit (50, 60) einschließlich mindestens eines Klopferfassungssensors (60), der mindestens einem Zylinder (26, 26A, 26B, 26C, 26D) des Verbrennungsmotors (10) zugeordnet ist, zum Erfassen von Klopfen oberhalb einer ersten Klopfschwelle (Th1) und oberhalb einer zweiten Klopfschwelle (Th2), die höher als die erste Klopfschwelle (Th1) ist, während des Betriebs des Verbrennungsmotors (10) und
eine Klopfsteuerungseinheit (50, 90) zum Steuern des Betriebs des Verbrennungsmotors (10) basierend auf dem Klopfen, das von der Klopferfassungseinheit (50, 60) erfasst wird, wobei die Klopfsteuerungseinheit konfiguriert ist zum:
Bestimmen, wie viele Male (n) Klopfen oberhalb der ersten Klopfschwelle (Th1) während einer vorbestimmten Anzahl von Verbrennungszyklen in einem ersten Betriebsmodus des Verbrennungsmotors (10) erfasst wird; und
wenn die Anzahl (n) größer als eine vorbestimmte maximal zulässige Anzahl (nₘₐₓ) ist oder wenn Klopfen oberhalb der zweiten Klopfschwelle (Th2) erfasst wird, Veranlassen, dass der Verbrennungsmotor (10) in einem zweiten Betriebsmodus arbeitet, in dem kein Klopfen oberhalb einer dritten Klopfschwelle (Th3) auftritt, die kleiner als die erste Klopfschwelle (Th1) ist, indem Steuerparameter des Verbrennungsmotors verändert werden,
wobei die Klopfsteuerungseinheit (50, 90) nachdem der Verbrennungsmotor (10) veranlasst wurde, in dem zweiten Betriebsmodus zu arbeiten, ferner konfiguriert ist, um den Verbrennungsmotor (10) zu veranlassen, erneut in dem ersten Betriebsmodus zu arbeiten, nachdem eine vorbestimmte Zeit verstrichen ist, seit der Verbrennungsmotor (10) veranlasst wurde, in dem zweiten Betriebsmodus zu arbeiten, oder wenn kein Klopfen oberhalb der dritten Klopfschwelle (Th3) für eine vorbestimmte Zeitdauer erfasst wird.

2. Klopfsteuerungssystem (100) nach Anspruch 1, wobei die Klopfsteuerungseinheit (50, 90) eine Steuerung (50) einschließt, die mit dem mindestens einen Klopferfassungssensor (60) betriebsmäßig verbunden ist, wobei die Steuerung (50) konfiguriert ist zum:
Bestimmen einer Klopfanzahl aus einem Erfassungsergebnis von dem mindestens einen Klopferfassungssensor (60) und
Steuern von mindestens einem eines Zündzeitpunkts des Verbrennungsmotors (10), einer Kraftstoffmenge, die dem Verbrennungsmotor (10) zur Verbrennung zugeführt wird, und einer Temperatur von Ladeluft oder einer Mischung aus Ladeluft und Kraftstoff, die dem Verbrennungsmotor (10) zur Verbrennung zugeführt wird.

3. Klopfsteuerungssystem nach Anspruch 2, wobei die Steuerung (50) konfiguriert ist, um den Verbrennungsmotor (10) zu veranlassen, in dem zweiten Betriebsmodus zu arbeiten, indem eine Kraftstoffmenge reduziert wird, die dem mindestens einen Zylinder (26, 26A, 26B, 26C, 26D) des Verbrennungsmotors (10) zur Verbrennung zugeführt wird.

4. Klopfsteuerungssystem nach Anspruch 2 oder 3, wobei die Steuerung (50) konfiguriert ist, um zu veranlassen, dass der Verbrennungsmotor (10) in dem zweiten Betriebsmodus arbeitet, indem ein Zündzeitpunkt für den mindestens einen Zylinder (26, 26A, 26B, 26C, 26D) des Verbrennungsmotors (10) verzögert wird.

5. Klopfsteuerungssystem nach einem der Ansprüche 2 bis 4, wobei die Steuerung (50) konfiguriert ist, um zu veranlassen, dass der Verbrennungsmotor in dem zweiten Betriebsmodus arbeitet, indem Ladeluft oder eine Mischung aus Ladeluft und Kraftstoff, die mindestens einem Zylinder (26, 26A, 26B, 26C, 26D) des Verbrennungsmotors (10) zugeführt wird, gekühlt wird.

6. Klopfsteuerungssystem nach einem der Ansprüche 1 bis 5, wobei die Klopfsteuerungseinheit (50, 90) konfiguriert ist, um den Verbrennungsmotor (10) zu veranlassen, in dem zweiten Betriebsmodus zu arbeiten, indem ein Betriebsparameter des Verbrennungsmotors (10) allmählich von einem ersten Wert, der dem ersten Betriebsmodus zugeordnet ist, angepasst wird, bis im Wesentlichen kein Klopfen oberhalb der ersten Klopfschwelle (Th1) erfasst wird.

7. Klopfsteuerungssystem nach einem der Ansprüche 1 bis 6, wobei die Klopfsteuerungseinheit (50, 90) konfiguriert ist, um den Verbrennungsmotor (10) zu veranlassen, in dem zweiten Betriebsmodus zu arbeiten, indem mindestens ein Betriebsparameter des Verbrennungsmotors (10) auf einen voreingestellten Wert geändert wird, der dem zweiten Betriebsmodus zugeordnet ist.

8. Verbrennungsmotor (10), umfassend: eine Vielzahl von Zylindern (26, 26A, 26B, 26C, 26D) und die Klopfsteuerungseinheit (100) nach einem der Ansprüche 1 bis 7.

9. Verbrennungsmotor (10) nach Anspruch 8, ferner umfassend eine Vielzahl von Klopferfassungssensoren (60), wobei jeder Klopferfassungssensor (60) einem der Vielzahl von Zylindern (26, 26A, 26B, 26C, 26D) zugeordnet ist, wobei die Klopferfassungseinheit (50, 90) konfiguriert ist, um einen Zündzeitpunkt oder eine Kraftstoffeinspritzmenge für jeden der Vielzahl von Zylindern (26, 26A, 26B, 26C, 26D) basierend auf dem Klopfen, das durch den entsprechenden Klopferfassungssensor (60) erfasst wird, individuell anzupassen.

10. Verfahren zum Betreiben eines Verbrennungsmotors (10), umfassend:
Bestimmen (210), wie viele Male (n) Klopfen oberhalb einer ersten Klopfschwelle (Th1) während einer vorbestimmten Anzahl von Verbrennungszyklen in einem ersten Betriebsmodus des Verbrennungsmotors (10) auftritt;
wenn die Anzahl (n) größer als eine vorbestimmte maximal zulässige Anzahl (nₘₐₓ) ist oder wenn Klopfen oberhalb einer zweiten Klopfschwelle (Th2), die größer als die erste Klopfschwelle (Th1) ist, erfasst wird, Veranlassen (214), dass der Verbrennungsmotor (10) in einem zweiten Betriebsmodus arbeitet, in dem kein Klopfen oberhalb einer dritten Klopfschwelle (Th3) auftritt, die niedriger als die erste Klopfschwelle (Th1) ist, indem Steuerungsparameter des Verbrennungsmotors verändert werden; und
nachdem der Verbrennungsmotor (10) veranlasst wurde, in dem zweiten Betriebsmodus zu arbeiten, Veranlassen des Verbrennungsmotors (10), wieder in dem ersten Betriebsmodus zu arbeiten, nachdem eine vorbestimmte Zeit verstrichen ist, seit der Verbrennungsmotor veranlasst wurde, in dem zweiten Betriebsmodus zu arbeiten, oder wenn für eine vorbestimmte Zeitdauer kein Klopfen oberhalb der dritten Klopfschwelle (Th3) erfasst wird.

11. Computerprogramm, das computerausführbare Anweisungen umfasst, die, wenn sie ausgeführt werden, veranlassen, dass die Klopferfassungseinheit und die Klopfsteuerungseinheit eines Klopfsteuerungssystems für einen Verbrennungsmotor (10) nach einem der Ansprüche 1 bis 9 die Schritte des Verfahrens nach Anspruch 10 durchführen.

## Revendications

1. Système de contrôle de cliquetis (100) pour un moteur à combustion interne (10), le système de contrôle de cliquetis (100) comprenant :
une unité de détection de cliquetis (50, 60) incluant au moins un capteur de détection de cliquetis (60) associé à au moins un cylindre (26, 26A 26B, 26C, 26D) du moteur à combustion interne (10), pour détecter le cliquetis au-dessus d'un premier seuil de cliquetis (Th1) et au-dessus d'un deuxième seuil de cliquetis (Th2), qui est supérieur au premier seuil de cliquetis (Th1), pendant le fonctionnement du moteur à combustion interne (10) ; et
une unité de contrôle de cliquetis (50, 90) pour contrôler le fonctionnement du moteur à combustion interne (10) sur la base du cliquetis détecté par l'unité de détection de cliquetis (50, 60), l'unité de contrôle de cliquetis étant configurée pour :
déterminer un nombre de fois (n) où le cliquetis au-dessus du premier seuil de cliquetis (Th1) est détecté pendant un nombre prédéterminé de cycles de combustion dans un premier mode de fonctionnement du moteur à combustion interne (10) ; et
lorsque le nombre de fois (n) est supérieur à un nombre de fois maximum admissible prédéterminé (nₘₐₓ) ou lorsque le cliquetis au-dessus du deuxième seuil de cliquetis (Th2) est détecté, amener le moteur à combustion interne (10) à fonctionner dans un deuxième mode de fonctionnement dans lequel aucun cliquetis au-dessus d'un troisième seuil de cliquetis (Th3), qui est inférieur au premier seuil de cliquetis (Th3), ne se produit, en modifiant des paramètres de contrôle du moteur à combustion interne,
dans lequel l'unité de contrôle de cliquetis (50, 90), après avoir amené le moteur à combustion interne (10) à fonctionner dans le deuxième mode de fonctionnement, est en outre configurée pour amener le moteur à combustion interne (10) à fonctionner de nouveau dans le premier mode de fonctionnement après qu'un temps prédéterminé s'est écoulé depuis que le moteur à combustion interne (10) a été amené à fonctionner dans le deuxième mode de fonctionnement, ou lorsque aucun cliquetis au-dessus du troisième seuil de cliquetis (Th3) n'est détecté pendant un laps de temps prédéterminé.

2. Système de contrôle de cliquetis (100) selon la revendication 1, dans lequel l'unité de contrôle de cliquetis (50, 90) inclut un système de commande (50) connecté de manière opérationnelle à l'au moins un capteur de détection de cliquetis (60), le contrôleur (50) étant configuré pour :
déterminer une quantité de cliquetis à partir d'un résultat de détection provenant dudit au moins un capteur de détection de cliquetis (60) ; et
commander au moins l'une d'une temporisation d'allumage du moteur à combustion interne (10), d'une quantité de carburant fournie au moteur à combustion interne (10) pour la combustion, et d'une température d'air de suralimentation ou d'un mélange d'air de suralimentation et de carburant fourni au moteur à combustion interne (10) pour la combustion.

3. Système de contrôle de cliquetis selon la revendication 2, dans lequel le contrôleur (50) est configuré pour amener le moteur à combustion interne (10) à fonctionner dans le deuxième mode de fonctionnement en réduisant une quantité de carburant fournie au moins un cylindre (26, 26A, 26B, 26C, 26D) du moteur à combustion interne (10) en vue de la combustion.

4. Système de contrôle de cliquetis selon la revendication 2 ou 3, dans lequel le contrôleur (50) est configuré pour amener le moteur à combustion interne (10) à fonctionner dans le deuxième mode de fonctionnement en retardant une temporisation d'allumage pour l'au moins un cylindre (26, 26A, 26B, 26C, 26D° du moteur à combustion interne (10).

5. Système de contrôle de cliquetis selon l'une quelconque des revendications 2 à 4, dans lequel le contrôleur (50) est configuré pour amener le moteur à combustion interne à fonctionner dans le deuxième mode de fonctionnement en refroidissant l'air de suralimentation ou un mélange d'air de suralimentation et de carburant fourni à au moins un cylindre (26, 26A, 26B, 26C, 26D) du moteur à combustion interne (10).

6. Système de contrôle de cliquetis selon l'une quelconque des revendications 1 à 5, dans lequel l'unité de contrôle de cliquetis (50, 90) est configurée pour amener le moteur à combustion interne (10) à fonctionner dans le deuxième mode de fonctionnement, en ajustant progressivement un paramètre de fonctionnement du moteur à combustion interne (10) à partir d'une première valeur associée au premier mode de fonctionnement jusqu'à ce que sensiblement aucun cliquetis au-dessus du premier seuil de cliquetis (Th1) ne soit détecté.

7. Système de contrôle de cliquetis selon l'une quelconque des revendications 1 à 6, dans lequel l'unité de contrôle de cliquetis (50, 90) est configurée pour amener le moteur à combustion interne (10) à fonctionner dans le deuxième mode de fonctionnement en changeant au moins un paramètre de fonctionnement du moteur à combustion interne (10) à une valeur préétablie associée au deuxième mode de fonctionnement.

8. Moteur à combustion interne (10) comprenant : une pluralité de cylindres (26, 26A, 26B, 26C, 26D) ; et le système de contrôle de cliquetis (100) selon l'une quelconque des revendications 1 à 7.

9. Moteur à combustion interne (10) selon la revendication 8, comprenant en outre une pluralité de capteurs de détection de cliquetis (60), chaque capteur de détection de cliquetis (60) étant associé à l'une parmi la pluralité de cylindres (26, 26A, 26B, 26C, 26D), dans lequel l'unité de contrôle de cliquetis (50, 90) est configurée pour ajuster individuellement une temporisation à l'allumage ou une quantité d'injection de carburant pour chacun parmi la pluralité de cylindres (26, 26A, 26B, 26C, 26D) sur la base du cliquetis détecté par le capteur de détection de cliquetis correspondant (60).

10. Procédé de fonctionnement d'un moteur à combustion interne (10), comprenant :
la détermination (210) d'un nombre de fois (n) où un cliquetis au-dessus d'un premier seuil de cliquetis (Th1) se produit pendant un nombre prédéterminé de cycles de combustion dans un premier mode de fonctionnement du moteur à combustion interne (10) ;
lorsque le nombre de fois (n) est supérieur à un nombre de fois maximum autorisé prédéterminé (nₘₐₓ) ou lorsqu'un cliquetis au-dessus d'un deuxième seuil de cliquetis (Th2), qui est plus élevé que le premier seuil de cliquetis (Th1), est détecté, amenant (214) le moteur à combustion interne (10) à fonctionner dans un deuxième mode de fonctionnement, dans lequel aucun cliquetis au-dessus d'un troisième seuil de cliquetis (Th3), qui est inférieur au premier seuil de cliquetis (Th1), se produit, en modifiant des paramètres de contrôle du moteur à combustion interne ; et
après avoir amené le moteur à combustion interne (10) à fonctionner dans le second mode de fonctionnement, amener le moteur à combustion interne (10) à fonctionner de nouveau dans le premier mode de fonctionnement après qu'un temps prédéterminé s'est écoulé depuis que le moteur à combustion interne a été amené à fonctionner dans le deuxième mode de fonctionnement, ou lorsqu'aucun cliquetis supérieur au troisième seuil de cliquetis (Th3) n'est détecté pendant un laps de temps prédéterminé.

11. Programme informatique comprenant des instructions exécutables par ordinateur qui, lorsqu'elles sont exécutées, amènent l'unité de détection de cliquetis et l'unité de contrôle de cliquetis d'un système de contrôle de cliquetis pour un moteur à combustion interne (10) selon l'une quelconque des revendications 1 à 9 à réaliser les étapes du procédé selon la revendication 10.
